# EUROPÄISCHE PATENTSCHRIFT

(11) **EP 1 262 703 B1**
(45) Veröffentlichungstag und Bekanntmachung des Hinweises auf die Patenterteilung: **16.04.2003**
(21) Anmeldenummer: 01113701.5
(22) Anmeldetag: 02.06.2001
(51) Int. Cl.: F16L 25/00, F16L 33/00

(54) **Schlauchverbinder**
Hose coupling
Raccord pour tuyau flexible

(43) Veröffentlichungstag der Anmeldung: 04.12.2002
(73) Patentinhaber: Mühlhan Surface Protection International GmbH, 21107 Hamburg (DE)
(72) Erfinder: Greverath, Wulf-Dieter Dr., 22605 Hamburg (DE)
(74) Vertreter: Fleck, Thomas, Dr. Dipl.-Chem.

(56) Entgegenhaltungen:
- DE-U- 9 320 674
- FR-A- 2 279 016
- US-A- 3 727 953
- US-A- 5 700 039

## Beschreibung

Die Erfindung betrifft einen Schlauchverbinder zur Verbindung zweier Schlauchteile nach dem Oberbegriff des Anspruchs 1.

Zur Behandlung von Oberflächen werden u.a. mineralische und/oder Stahlstrahlmittel verwendet, die mittels Druckluft bspw. im Bereich von 5 bis 12 bar durch einen Förderschlauch von einer Strahlerzeugungseinheit zur Austrittsdüse gefördert werden. Als Oberflächen sind Schiffs- und Gebäudewände, Tanks, Behälter und Industrieanlagen, sowie sonstige Metallgegenstände denkbar, die z.B. entrostet werden. Es ist bekannt, Förderschläuche mit jeweils unterschiedlichen Durchmessern aneinanderzukoppeln idR mit einem Bajonettverschluß, wobei dabei entsprechende Widerstände in der Kuppelung wegen der unterschiedlichen Durchmesser entstehen.

Die US-A-5,700,039 beschreibt einen Auspuffrohradapter zum Verbinden eines handelsüblichen Gartenschlauches mit dem Auspuffrohr eines Fahrzeuges, um im Erdreich befindliches Ungeziefer durch dahin eingeleitete Abgase des Fahrzeuges abzutöten. Der Adapter besteht aus einem gummiartigen flexiblen Körper, der durch eine Klemme auf der Außenfläche des Auspuffrohres zusammengedrückt wird, um denselben während des Betriebes an Ort und Stelle zu halten. Der Adapter weist einen mehrfach stufigen Innendurchmesser auf.

Die US-A-3,727,953 zeigt eine flexible Kupplung für unterirdische Drainage-Systeme zum Verbinden gerippter Rohre unterschiedlichen Querschnittsdurchmessers, die einen rohrförmigen Gehäuseschnitt mit zwei integralen länglichen Abschnitten unterschiedlicher Durchmesser besitzt, die den Querschnittsdurchmessern der zu verbindenden Rohre entsprechen, welche durch einen kurzen kegelstumpfförmigen Abschnitt miteinander verbunden sind. Da die Gräben der Drainage-Systeme häufig in unterschiedlichen Tiefen liegen, muß sich die flexible Kupplung relativ zu den gerippten Rohren drehen können. Darüber hinaus müssen die Endabschnitte des rohrförmigen Gehäuses jeweils einen Schlitz aufweisen, der etwa bis zur Mitte verläuft, damit eine leichte Ausdehnung möglich wird, damit sie über die zu verbindenden gerippten Rohrabschnitte gestülpt werden können.

Aufgabe der vorliegenden Erfindung ist es, einen Schlauchverbinder der eingangs genannten Art hinsichtlich seiner Effizienz zu verbessern, was durch den Gegenstand des Anspruches 1 gelöst wird.

Zunächst seien einige der verwendeten Begriffe erläutert.

Ein Förderschlauch wird im wesentlichen von zwei oder mehreren Schläuchen gebildet, die zur durchgehenden Förderung von Fördermedium miteinander verbunden sind. Der jeweils eine Schlauch bildet einerseits das Eintrittsende des Förderschlauchs und ist andererseits mit dem einen Ende des Schlauchverbinders verbunden. Der jeweils andere Schlauch ist einerseits mit dem entgegengesetzten Ende des Schlauchverbinders verbunden und bildet andererseits das Austrittsende des Förderschlauchs. Der Teil eines Schlauches, der von dem Schlauchverbinder aufgenommen wird, wird als "Schlauchteil" bezeichnet.

In der Regel ist der eintrittsseitige Schlauchteil derjenige mit dem größeren Innendurchmesser; die Erfindung umfaßt aber auch den umgekehrten Fall. Auf die Innenquerschnittsform eines Schlauches kommt es für die Erfindung nicht an; in der Regel handelt es sich um kreisförmige Querschnitte. Bei nicht kreisförmigem Innenquerschnitt meint der Innendurchmesser den mittleren Innendurchmesser; dies entspricht einer Bezugnahme auf die Innenquerschnittsfläche. Falls beide Schlauchteile unterschiedliche oder unterschiedlich orientierte Querschnittsformen aufweisen, ist es vorteilhaft, wenn das Zwischenstück seine Innenquerschnittsform stetig von derjenigen des einen zu derjenigen des anderen Schlauchteils ändert.

Die Rohrform eines Anschlußstücks und/oder des Zwischenstücks ist nicht auf eine bestimmte Innenquerschnittsform beschränkt, wobei es sich meist um kreisförmige Querschnitte handeln wird. Es muß sich nicht um ein geschlossenes Rohrstück handeln; beispielsweise können Funktionsöffnungen wie die vorteilhaften Öffnungen für Befestigungsschrauben vorgesehen sein. Während die Rohrstücke meistens gerade verlaufen werden, sind auch gebogene Rohrstücke nicht ausgeschlossen.

Ein stetiges oder gleichförmiges Verjüngen des Innendurchmessers des bzw. der Zwischenstücks(e) bedeutet, daß in Strömungsrichtung gesehen keine mehr oder weniger abrupten Querschnittsveränderungen auftreten. Vorzugsweise sind die Innenflächen des Zwischenstücks im wesentlichen glatt. "Im wesentlichen" bedeutet, daß eine strömungstechnisch günstige Oberflächengestaltung nicht ausgeschlossen sein soll. Bei kreisförmigem Innenquerschnitt und geradem Zwischenstück führt dies zu einer kegelstumpfförmigen Innenwand des Zwischenstücks.

Die Erfindung hat erkannt, daß im Stand der Technik aufgrund der unterschiedlichen Innenquerschnitte der beiden Schlauchteile eine mehr oder weniger abrupte Innenquerschnittsveränderung auftritt, was zur Bildung eines strömungstechnisch ungünstigen Vorsprungs bzw. unstetigen Übergangs führt. Besonders ungünstig ist dies bei einer Querschnittsverengung in Strömungsrichtung. Die damit verbundenen Strömungsverluste werden erfindungsgemäß durch den stetigen Übergang des Innenquerschnitts des Zwischenstücks von einem Ende zum entgegengesetzten Ende vermieden. Dadurch kann, im Vergleich zum Stand der Technik, bei gleichem Eingangsdruck ein höherer Austrittsdruck und eine entsprechende Steigerung der Effizienz erzielt werden. Alternativ führt eine Verringerung des Eingangsdrucks bei gleichem Ausgangsdruck zu einer Effizienzsteigerung. Bei einer Verjüngung in Strömungsrichtung wirkt das Zwischenstück gegebenenfalls wie eine Düse, was zu einer weiteren Effizienzsteigerung führen kann.

Bei einer vorteilhaften Ausführungsform entspricht der Innendurchmesser des Zwischenstücks an einem, vorzugsweise beiden Enden jeweils etwa dem Innendurchmesser des entsprechenden Schlauchteils. Dadurch werden abrupte Querschnittsänderungen auch an den Übergängen jeweils zwischen den Schlauchteilen und dem Zwischenstück vermieden. Strömungstechnisch bevorzugt ist eine sanfte Verjüngung des Innendurchmessers um höchstens 35 %, vorzugsweise höchstens 25 %, weiter vorzugsweise höchstens 15 % relativ zur Länge des Zwischenstücks. Bei vorgegebenen Schlauchinnendurchmessern ist das bzw. die Zwischenstücke daher zweckmäßigerweise ausreichend lang. Wenn der Innendurchmesser eines, vorzugsweise beider Anschlußstücke etwa dem Außendurchmesser des jeweils darin aufzunehmenden Schlauchteils entspricht, ist eine paßgenaue Aufnahme der Schlauchteile möglich, so daß diese sicher gehalten sind. Bei geringfügig, d.h. etwa 2 bis 6 %, vorzugsweise 3 bis 5 % größerem Schlauchaußendurchmesser kann eine geringfügige Stauchung des Schlauchmaterials zu einem noch festeren Halten des Schlauchs führen. Die geschilderte bevorzugte Ausführungsform weist einen rohrförmiqen, entlang dem Zwischenstück verlaufenden Einsatz auf, dessen ringförmige Stirnflächen jeweils etwa der Schlauchwand-Stirnfläche des entsprechenden Schlauchteils entspricht und mit dieser Stirn an Stirn anliegt.

Bei nicht kreisförmigem Innen- bzw. Außenquerschnitt eines Schlauchteils gelten die Merkmale der Ansprüche 2 und 5 vorzugsweise für die Innenquerschnittsform des Zwischenstücks bzw. der Anschlußstücke entsprechend.

Die Innenflächen des Zwischenstücks sind insbesondere bei Verjüngung in Strömungsrichtung erhöhten Belastungen ausgesetzt, da sie eine senkrecht zur Strömungsrichtung verlaufende Richtungskomponente aufweisen. Sie sind daher vorzugsweise besonders widerstandsfähig ausgeführt. Beispielsweise können bei einem Schlauchverbinder aus Stahl die Innenflächen gehärtet sein. Eine andere Möglichkeit ist eine widerstandsfähige Gummierung der Zwischenstück-Innenflächen; der Schlauchverbinder selbst kann dann bspw. aus Aluminium bestehen. Bei der oben geschilderten bevorzugten Ausführungsform kann der genannte Zwischenstück-Einsatz aus einem im Vergleich zum übrigen Material besonders widerstandsfähigem Material, bspw. gehärtetem Stahl, bestehen. Der größte Teil kann auch als Einsteckhülse oder -düse ausgearbeitet sein.

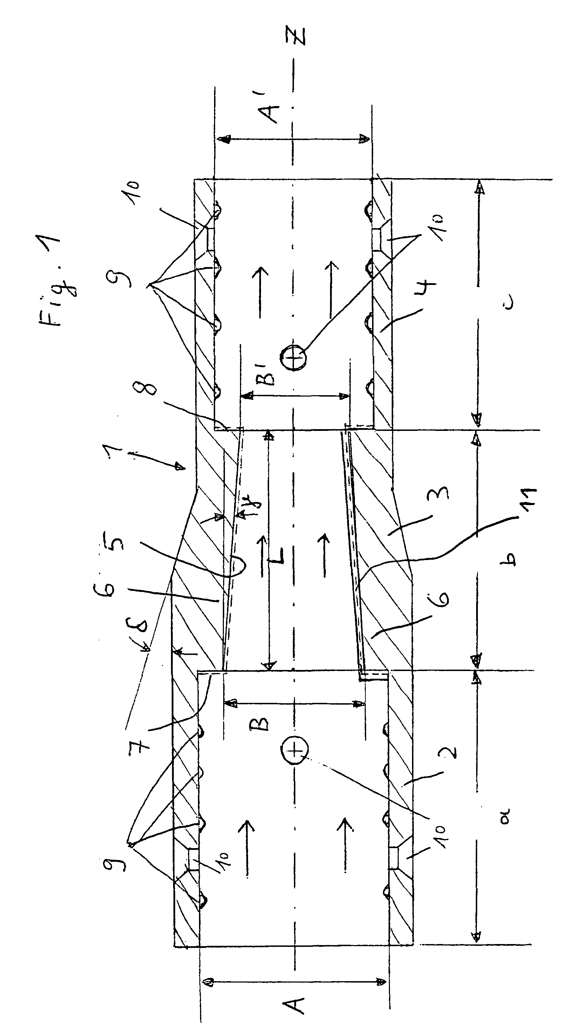

Die vorgenannten und weitere bevorzugte Merkmale der Erfindung werden im folgenden anhand eines vorteilhaften Ausführungsbeispiels unter Bezugnahme auf Fig. 1 erläutert.
- Fig. 1: zeigt (etwa maßstabsgetreu) einen Schlauchverbinder im Längsmittenquerschnitt.

Der Schlauchverbinder 1 ist einstückig aus dem Anschlußstück 2 (Abschnitt a), dem Zwischenstück 3 (Abschnitt b) und dem Anschlußstück 4 (Abschnitt c) gebildet. Alle drei Rohrstücke 2, 3, 4 sind im wesentlichen, d.h. bis auf die Bohrungen 10, rotationssymmetrisch um ihre jeweilige Mittelachse. Die entsprechenden Mittelachsen sind koaxial zueinander und bilden die gemeinsame Mittelachse Z. Der Schlauchverbinder 1 ist somit insgesamt im wesentlichen rotationssymmetrisch. Das Fördermedium strömt, wie durch Pfeile angedeutet, in Fig. 1 von links nach rechts durch den Schlauchverbinder 1.

Das eintrittsseitige Anschlußrohr 2 ist zur Aufnahme eines nicht gezeigten Schlauchteils mit einem Außendurchmesser von 48 mm vorgesehen und weist einen Innendurchmesser A von 46 mm auf. Das austrittsseitige Anschlußrohr 4 ist zur Aufnahme eines nicht gezeigten Schlauchteils mit einem Außendurchmesser von 39 mm vorgesehen und weist einen Innendurchmesser A' von 37.6 mm auf. Die jeweiligen Anschlußrohrinnendurchmesser sind also etwa 3 bis 4 % geringer als die entsprechenden Schlauchaußendurchmesser, so daß eine geringfügige Stauchung des Schlauchmaterials im Umfangsrichtung erfolgt und die Schlauchteile fest in den Anschlußrohren gehalten werden. Das Schlauchmaterial, bspw. Gummi mit Fasergewebe, ist zu diesem Zweck hinreichend komprimierbar.

Das Zwischenstück 3 ist eingangsseitig mit dem Anschlußrohr 2 und austrittsseitig mit dem Anschlußrohr 4 verbunden. An seinem eingangsseitigen Ende weist es einen Innendurchmesser B von 32 mm auf, was dem Innendurchmesser des zur Aufnahme im Anschlußrohr 2 vorgesehenen Schlauchteils entspricht. An der Übergangsstelle zwischen dem Anschlußrohr 2 und dem Zwischenstück 3 findet daher ein stetiger Übergang von der Schlauchinnenwand zur Zwischenstückinnenwand 5 statt. Entsprechendes gilt für den Übergang vom Zwischenstück 3, dessen ausgangsseitiger Innendurchmesser B' 25 mm beträgt, zum Anschlußrohr 4, das zur Aufnahme eines Schlauchteils mit demselben Innendurchmesser vorgesehen ist.

Der Innendurchmesser des Zwischenstücks 3 verjüngt sich von der Eingangsseite zur Ausgangsseite stetig und gleichförmig von 32 mm auf 25 mm; die Innenwand 5 des Zwischenstücks 3 ist kegelstumpfförmig mit einer Neigung des Kegelmantels zur Mittelachse Z von 3.7°. Die Länge L des Zwischenstücks 3 beträgt 58 mm; der Innendurchmesser des Zwischenstücks ändert sich relativ dazu um 12 %. Wie aus Fig. 1 ersichtlich kann das Zwischenstück die Wirkung einer Düse aufweisen.

Die geschilderte Form des Schlauchverbinders 1 führt zur Bildung eines Einsatzes 6 im Zwischenstück 3 mit Stirnflächen 7 bzw. 8, die ringförmig sind mit einer Ringbreite von 7 mm bzw. 6.3 mm entsprechend der Wandstärke der entsprechenden Schlauchteile. Die Stirnflächen der Schlauchteilenden liegen jeweils Stirn an Stirn mit den Stirnflächen 7, 8 des Einsatzes 6.

Um das Einführen der Schlauchteile in den Anschlußrohre 2, 4 zu erleichtern, sind jeweils vier umlaufende Rippen 9 mit stromlinienförmig abgerundetem Profil an den Innenwänden der Anschlußrohre 2, 4 vorgesehen. Sie sorgen für ein geringfügiges Abheben der Schlauchteile an den entsprechenden Stellen, um ein vorzeitiges Festfressen der Schlauchteile in den Anschlußrohren 2, 4 zu verhindern.

An beiden Anschlußrohren 2, 4 sind jeweils zwei axial beabstandete und um 90° um die Mittelachse Z verdrehte Paare von gegenüberliegenden Bohrungen 10 vorgesehen. Sie dienen zur Durchführung von nicht gezeigten Senkkopf-Blechschrauben, die zur Befestigung der Schlauchteile in den Anschlußrohren 2, 4 verwendet werden.

Der Schlauchverbinder 1 besteht aus Stahl oder Aluminium. Die Innenwände 5 sind, wie mit Hilfe der gestrichelten Linie angedeutet, gehärtet, um den erhöhten Belastungen in diesem Bereich zu widerstehen. Zu diesem Zweck könnte auch eine Gummierung vorgesehen sein oder der Einsatz 6 des Zwischenstücks 3 aus gehärtetem Material bestehen.

## Patentansprüche

1. Schlauchverbinder (1) aus Stahl oder Aluminium zur Verbindung zweier Schlauchteile mit unterschiedlichen Innendurchmessern zu einem durchgehenden Förderschlauch zur Behandlung von Oberflächen wie Schiffs- und Gebäudewänden, Tanks, Behälter, Industrieanlagen, sowie sonstiger Metallgegenstände mittels druckluftgeförderter Medien, wobei der Schlauchverbinder (1) ein erstes rohrförmiges Anschlußstück (2) zur Aufnahme des Schlauchteils mit größerem Innendurchmesser, ein zweites rohrförmiges Anschlußstück (4) zur Aufnahme des Schlauchteils mit geringerem Innendurchmesser und ein zwischen dem ersten (2) und zweiten Anschlußstück (4) angeordnetes, rohrförmiges Zwischenstück (3) aufweist, **dadurch gekennzeichnet, daß** das Zwischenstück (3) einen sich vom ersten (2) zum zweiten Anschlußstück (4) stetig und gleichförmig verjüngenden Innendurchmesser aufweist, wobei das Zwischenstück (3) auch mehrteilig und/oder als Kupplung bzw. als Einsteckteil ausgestattet sein kann, und daß die Verjüngung B - B' des Innendurchmessers des Zwischenstücks (3) relativ zu seiner Länge L höchstens 35 % beträgt, und daß die Innenflächen (5) des bzw. der Zwischenstück(e) (3) zur Erzielung höherer Widerstandsfähigkeit beschichtet, gummiert oder gehärtet sind, oder stattdessen eine entsprechend behandelte Einsteckdüse (11) vorgesehen ist.

2. Schlauchverbinder nach Anspruch 1, **dadurch gekennzeichnet, daß** der Innendurchmesser B, B' des Zwischenstücks (3) an einem oder beiden Enden jeweils etwa dem Innendurchmesser des entsprechenden Schlauchteils entspricht, oder etwas größer ist.

3. Schlauchverbinder nach einem der Ansprüche 1 und 2, **dadurch gekennzeichnet, daß** die Verjüngung B - B' des Innendurchmessers des Zwischenstücks (3) relativ zu seiner Länge L höchstens 25 %, weiter vorzugsweise höchstens 15 % beträgt.

4. Schlauchverbinder nach einem der Ansprüche 1 bis 3, **dadurch gekennzeichnet, daß** der Innendurchmesser A, A' des ersten und/oder zweiten Anschlußstücks (2, 4) etwa dem Außendurchmesser des jeweils darin aufzunehmenden Schlauchteils entspricht.

5. Schlauchverbinder nach einem der Ansprüche 1 bis 4, **dadurch gekennzeichnet, daß** das erste Anschlußstück (2), das zweite Anschlußstück (4) und das bzw. die Zwischenstück(e) (3) etwa koaxial zueinander angeordnet sind.

6. Schlauchverbinder nach einem der Ansprüche 1 bis 5, **dadurch gekennzeichnet, daß** eines oder beide Anschlußstücke (2, 4) und/oder das bzw. die Zwischenstücke (3) im wesentlichen etwa rotationssymmetrisch um ihre jeweilige Mittelachse sind.

7. Schlauchverbinder nach Anspruch 1, **dadurch gekennzeichnet, daß** er im wesentlichen einstückig ist.

8. Schlauchverbinder nach einem der Ansprüche 1 bis 7, **dadurch gekennzeichnet, daß** an den Innenflächen von einem oder beiden Anschlußstücken (2, 4) eine oder mehrere Umfangsrippen (9) vorgesehen sind.

9. Schlauchverbinder nach einem der Ansprüche 1 bis 8, **dadurch gekennzeichnet, daß** in den Wänden von einem oder beiden Anschlußstücken (2, 4) Öffnungen (10) für Befestigungseinrichtungen, insbesondere Befestigungsschrauben, vorgesehen sind.

## Claims

1. Hose joint (1) made from steel or aluminium for joining two hose parts having different internal diameters to form a continuous delivery hose for the treatment of surfaces such as ship and building walls, tanks, containers, industrial installations and miscellaneous metal objects by means of compressed air-delivered media, wherein the hose joint (1) has a first tubular connecting piece (2) for receiving the larger internal diameter hose part, a second tubular connecting piece (4) for receiving the smaller internal diameter hose part and a tubular intermediate piece (3) located between the first (2) and second (4) connecting pieces, **characterized in that** the intermediate piece (3) has a constantly and uniformly narrowing internal diameter from the first (2) to the second (4) connecting piece, it also being possible for the intermediate piece (3) to be constructed in multipart manner and/or as a coupling or as an inserting part, and **that** the narrowing B-B' of the internal diameter of the intermediate piece (3) is max 35% relative to its length L, and that the inner surfaces (5) of the intermediate piece or pieces (3) are coated, rubberized or hardened to increase the resistance, or instead a correspondingly treated inserting nozzle (11) is provided.

2. Hose joint according to claim 1, **characterized in that** the internal diameter B, B' of the intermediate piece (3) at one or both ends roughly corresponds to or is somewhat larger than the internal diameter of the corresponding hose part.

3. Hose joint according to one of the claims 1 and 2, **characterized in that** the narrowing B - B' of the internal diameter of the intermediate piece (3) relative to its length L is max 25% and is preferably max 15%.

4. Hose joint according to one of the claims 1 to 3, **characterized in that** the internal diameter A, A' of the first and/or second connecting piece (2, 4) roughly corresponds to the external diameter of the particular hose part to be received therein.

5. Hose joint according to one of the claims 1 to 4, **characterized in that** the first connecting piece (2), the second connecting piece (4) and the intermediate piece or pieces (3) are arranged roughly coaxially to one another.

6. Hose joint according to one of the claims 1 to 5, **characterized in that** one or both connecting pieces (2, 4) and/or the intermediate piece or pieces (3) are positioned substantially roughly rotationally symmetrically about their centre axis.

7. Hose joint according to claim 1, **characterized in that** it is substantially in one piece.

8. Hose joint according to one of the claims 1 to 7, **characterized in that** one or more circumferential ribs (9) are provided on the inner surfaces of one or both connecting pieces (2, 4).

9. Hose joint according to one of the claims 1 to 8, **characterized in that** openings (10) for fixing devices, particularly fixing screws, are provided in the walls of one or both connecting pieces (2, 4).

## Revendications

1. Connecteur (1) en acier ou en aluminium pour relier deux parties de tuyau de diamètres intérieurs différents en un tuyau de transport continu pour le traitement de surfaces telles que des parois de navires et des murs de bâtiments, de cuves, de conteneurs, d'installations industrielles ou d'autres objets métalliques au moyen de milieux transportés par air comprimé, le connecteur (1) comportant une première pièce de raccordement (2) tubulaire destinée à recevoir la partie de tuyau présentant le plus grand diamètre intérieur, une seconde pièce de raccordement (4) tubulaire destinée à recevoir la partie de tuyau présentant le diamètre intérieur plus faible et une pièce intermédiaire (3) tubulaire disposée entre la première (2) et la seconde (4) pièce de raccordement, **caractérisé en ce que** la pièce intermédiaire (3) présente un diamètre intérieur qui diminue de manière continue et régulière entre la première pièce de raccordement (2) et la seconde pièce de raccordement (4), la pièce intermédiaire (3) pouvant également être réalisée en plusieurs parties et/ou sous forme d'accouplement ou d'élément à emboîtement, et que la diminution B-B' du diamètre intérieur de la pièce intermédiaire (3) par rapport à la longueur L de celle-ci est de 35% au plus, et que les faces intérieures (5) de la ou des pièce(s) intermédiaire(s) (3), pour obtenir une résistance plus élevée, sont pourvues d'un revêtement, sont caoutchoutées ou trempées, ou qu'au lieu de cela, il est prévu une buse à emboîtement (1) traitée de manière correspondante.

2. Connecteur selon la revendication 1, **caractérisé en ce que** le diamètre intérieur B,B' de la pièce intermédiaire (3), à une ou aux deux extrémités, correspond sensiblement au diamètre intérieur de la partie de tuyau correspondante, ou est légèrement supérieur à celui-ci.

3. Connecteur selon une des revendications 1 et 2, **caractérisé en ce que** la diminution B-B' du diamètre intérieur de la pièce intermédiaire (3) par rapport à la longueur L de celle-ci est de 25% au plus, de préférence de 15% au plus.

4. Connecteur selon une des revendications 1 à 3, **caractérisé en ce que** le diamètre intérieur A, A' de la première et/ou de la seconde pièce de raccordement (2, 4) correspond sensiblement au diamètre extérieur de la partie de tuyau à insérer dans ladite pièce.

5. Connecteur selon une des revendications 1 à 4, **caractérisé en ce que** la première pièce de raccordement (2), la seconde pièce de raccordement (4) et la ou les pièce(s) intermédiaire(s) (3) sont disposées pour l'essentiel coaxialement les unes par rapport aux autres.

6. Connecteur selon une des revendications 1 à 5, **caractérisé en ce qu'**une ou les deux pièces de raccordement (2, 4) et/ou la ou les pièce(s) intermédiaire(s) (3) sont pour l'essentiel sensiblement à symétrie de révolution autour de leur axe central.

7. Connecteur selon la revendication 1, **caractérisé en ce qu'**il est pour l'essentiel d'une seule pièce.

8. Connecteur selon une des revendications 1 à 7, **caractérisé en ce qu'**une ou plusieurs nervures circulaires (9) sont prévues sur les faces intérieures de l'une ou des deux pièces de raccordement (2, 4).

9. Connecteur selon une des revendications 1 à 8, **caractérisé en ce que** des ouvertures (10) pour des dispositifs de fixation, en particulier des vis de fixation, sont prévues dans les parois d'une ou des deux pièces de raccordement (2, 4).
